# EUROPEAN PATENT SPECIFICATION

(11) **EP 3 651 626 B1**
(45) Date of publication and mention of the grant of the patent: **24.04.2024**
(21) Application number: 18831809.1
(22) Date of filing: 04.07.2018
(51) Int. Cl.: A47K 3/28, E03B 1/04, E03C 1/01, E03C 1/04, E03C 1/05, C02F 1/00, E03C 1/00

(54) **METHOD FOR OPERATING A RECIRCULATING DEVICE IN FUNCTION OF AN OBJECT TYPE'S DETECTION AND A WATER RECIRCULATING DEVICE**
VERFAHREN ZUM BETRIEB EINER WASSERRÜCKFÜHRUNGSVORRICHTUNG IN ABHÄNGIGKEIT EINES ERFASSTEN OBJEKTTYPS UND VORRICHTUNG ZUR WASSERRÜCKFÜHRUNG
PROCÉDÉ DE FONCTIONNEMENT D'UN DISPOSITIF DE RECIRCULATION DE L'EAU EN FONCTION D'UN TYPE D'OBJET DÉTECTÉ ET DISPOSITIF DE RECIRCULATION DE L'EAU

(30) Priority: 14.07.2017 SE 1750938; 14.07.2017 SE 1750939
(43) Date of publication of application: 20.05.2020
(73) Proprietor: Orbital Systems AB, 211 20 Malmö (SE)
(72) Inventor: RIDELL, Michael, 245 42 Staffanstorp (SE)
(74) Representative: AWA Sweden AB
(86) International application number: PCT/SE2018/050733
(87) International publication number: WO 2019/013690

(56) References cited:
- WO-A1-2013/095278
- KR-A- 20090 046 252
- KR-A- 20120 028 730
- US-A1- 2011 042 470
- US-A1- 2011 042 470
- US-A1- 2014 076 415
- US-B1- 6 384 414

## Description

### Technical field

The present invention is directed to a method for operating a water recirculation device in function of an object type's detection and to the associated recirculation device.

### Background

In many parts of the world, clean water is becoming a scarce commodity. Consequently, systems for purification and recycling of water has found applications across many fields. Such systems can be effective, however, they often require frequent maintenance in order to secure an acceptable hygiene within the device itself. The development of filter technology further adds to the problem when more water is able to be recirculated, while filtering more contaminants and microorganisms from the recirculated water.

There is therefore a need for improved water recirculating devices with respect to hygienic properties, and effectiveness.

US 2011/0042470 A1 discloses a user activated hot water heater and control system for processing hot water to hot water output locations, e.g. faucet, shower, or the like, such that temperature fluctuations and delays in hot water delivery are reduced. The user activated feature provides an energy saving result from the smart, upon demand, activation of internal and/or external recirculation systems. Additionally, the temperature of the hot water delivered is adjusted to a predetermined value determined by a user signature constructed from a potential user physical attributes which are primarily based on the user's height, weight or combination thereof. Detection of a unique individual user or general category user is accomplished via the use of at least one physical attribute sensor such as IR sensors, strain gauge sensor or pressure sensing sensors for weight estimation, light or laser based sensors, proximity sensors, vibration sensors, ultrasonic sensors, simple switch type, or any combination thereof. The hot water delivery is optionally adjusted to a predetermined temperature value T(maximum) to better approximate the requirements or preferences of the user. The user dictated control of hot water heater value provides a safety feature that helps protect heat sensitive people such as children, the elderly and the like from potential water burns. US 2011/0042470 A1 further discloses an internal and an external recirculation loop. The internal recirculation loop's primary function is to get the heating system containing a burner activated and up to a predetermined operating temperature. The external recirculation loop's primary function is to prime hot water lines with hot water, thereby flushing out the once hot water which has cooled. Both the internal and external recirculation loops help to reduce temperature fluctuations and delays in hot water delivery. It is further disclosed a control system capable of managing false triggering by filtering out such detections (i.e. the discarding of entities that are not direct hot water users such as pets, insects and the like). There is also provided a user activated sensing system whose sensors are located in the vicinity of hot water output locations.

WO 2013/095278 A1 discloses a hybrid device for a recirculation shower, allowing purification and either recycling of water or discarding of water.

US 2014/0076415 A1 discloses a fluid flow control system having a fluid inlet configured to be operatively coupled to a fluid source, a fluid outlet in fluid communication with the fluid inlet such that fluid may exit the system therethrough.

### Summary of the invention

It is an object of the present invention to mitigate, alleviate or eliminate one or more of the above-identified deficiencies in the art and disadvantages singly or in combination.

According to a first aspect of the invention, these and other objects are achieved in full, or at least in part, by a method for operating a recirculating device in function of an object type's detection according to independent claim 1.

The recirculating device comprises: an outlet configured to output water; a collecting arrangement arranged to collect water output by the outlet; and a discard path configured to discard water from the water recirculating device; wherein the method comprises: receiving presence sensor data from a presence sensor arrangement of the water recirculating device; determining whether the object type is human based on the presence sensor data; and if the object type is human, setting the water recirculating device in a recirculation mode, else setting the water recirculating device in a discard mode.

The water recirculating device comprises a water quality sensor arrangement configured to collect water quality data of water collected by the collecting arrangement, and wherein the recirculation mode comprises: receiving the water quality data from the water quality sensor arrangement; determining the water quality measure of the water collected by the collecting arrangement based on the water quality data; if the water quality measure is below a first water quality threshold, discarding the water collected by the collecting arrangement; and if the water quality measure is equal to or above the first water quality threshold, recirculating at least part of the water collected by the collecting arrangement, and wherein the discard mode comprises: discarding the water collected by the collecting arrangement.

The step of determining whether the object type is human is also further based on the water quality data.

The method may further comprise associating the determination of the object type with a time stamp, wherein the step of determining whether the object type is human is further based on historical data pertaining to previous determinations of object types and respective previous time stamps.

The method may further comprise, if the object type is human, determining whether a fall has occurred based on the presence sensor data.

The presence sensor arrangement may comprise an infrared sensor.

The presence sensor arrangement may comprise an array of light receiving elements.

The presence sensor arrangement may comprise an accelerometer and/or a force sensor.

The method may further comprise, if the object type is human, determining a number of objects subjected to the water recirculating device based on the presence sensor data, and if the number of objects is less than two, setting the water recirculating device in the recirculation mode, else setting the water recirculating device in the discard mode.

The water recirculating device may be a water recirculating shower.

According to a second aspect of the invention, these and other objects are achieved in full, or at least in part, by a water recirculating device according to independent claim 9, comprising: an outlet configured to output water; a collecting arrangement arranged to collect water output by the outlet; and a discard path configured to discard water from the water recirculating device; a presence sensor arrangement configured to collect presence sensor data; a computing unit configured to receive presence sensor data and to determine whether an object type being subjected to the water recirculating device is human based on the presence sensor data; wherein the water recirculating device is configured to be set in a recirculation mode if the object type is human, and else to be set in a discard mode.

The water recirculating device further comprises a water quality sensor arrangement configured to collect water quality data of water collected by the collecting arrangement, wherein the computing unit is further configured to receive the water quality data from the sensor arrangement and to determine a water quality measure based on the water quality data, wherein the water recirculating device is configured to, in the recirculation mode, if the water quality measure is below a first water quality threshold, discard the water, and if the water quality measure is equal to or above the first water quality threshold, recirculate at least part of the water, and wherein the water recirculating device is configured to, in the discard mode, discard the water collected by the collecting arrangement.

The computing unit may be configured to, if the object type is human, determine whether a fall has occurred in relation to the water recycling device based on the presence sensor data.

The presence sensor arrangement may comprise an infrared sensor.

The presence sensor arrangement may comprise an accelerometer and/or a force sensor and/or a vibration sensor.

The water recirculating device may be a shower.

A feature described in relation to one aspect may also be incorporated in other aspects, and the advantage of the feature is applicable to all aspects in which it is incorporated.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. Further, the use of terms "first", "second", and "third", and the like, herein do not denote any order, quantity, or importance, but rather are used to distinguish one element from another. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of different embodiments of the present inventive concept, with reference to the appended drawings, wherein:
FIG. 1 schematically illustrates a water recirculating device;
FIG. 2 is a flow chart of a method for determining an object type being subjected to a water recirculating device;
FIG. 3 is a flow chart illustrating fall monitoring in relation to a water recirculating device.
FIGS. 4a - 4g illustrates water recirculating devices and examples of objects being subjected to a water recirculating device.
FIG. 5 is a flow chart of a method for determining an object type being subjected to a water recirculating device.

### Detailed description

The present disclosure relates to water recirculating devices. Initially, some terminology may be defined to provide clarification for the following disclosure.

Throughout the present disclosure, reference is made to paths. Such paths may be for example pipes for transporting water.

Throughout the present disclosure, references are made to features being arranged "downstream" and/or "upstream" of certain features. The flow direction to which the terms "downstream" and "upstream" refer should be understood to be a flow direction from the collecting arrangement to the outlet. In other words, the "stream" referred to in the terms "downstream" and "upstream" is a stream flowing from the collecting arrangement to the outlet.

Throughout the present disclosure, references are made to object types being subjected to a water recirculating device. Such an object type may be a human being. The object type may also comprise animals, such as a dog or a cat, household items, and/or any other item capable of being subjected to a water recirculating device. In some cases, the object being subjected to the water recirculating device is also the user of the water recirculating device.

In general, the invention contributes to the effectiveness of a water recirculating device in terms of hygiene and reduction of water consumption. This is achieved by determining whether a human is subjected to the water recirculating device, or whether another object is subjected to the water recirculating device. Hereby, the water recirculating device can be set in an appropriate mode e.g. a discard mode in order to spare the use of recirculating parts of the water recirculating device.

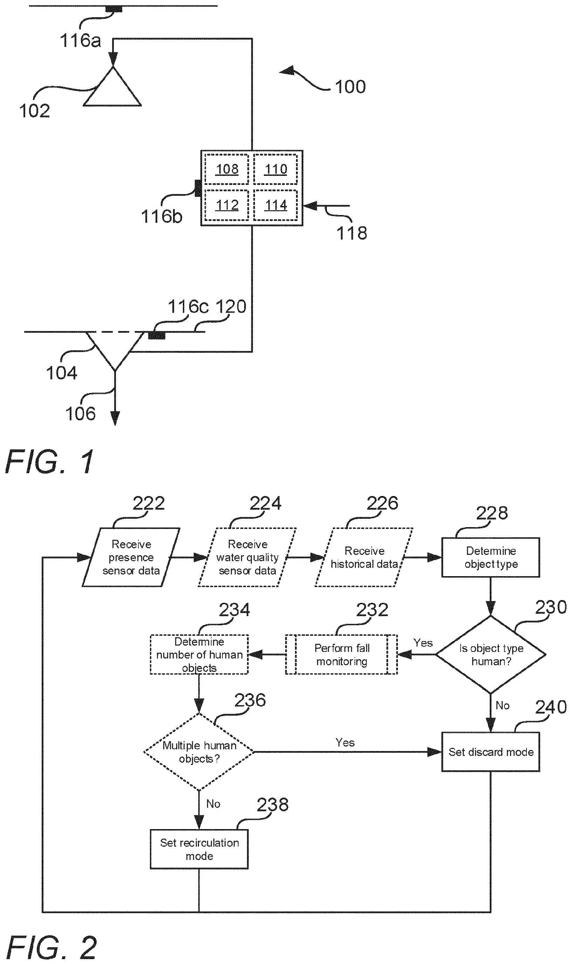

FIG. 1 illustrates a water recirculating device 100 comprising: an outlet 102 configured to output water; a collecting arrangement 104 arranged to collect water output by the outlet 102; a discard path 106 configured to discard water from the water recirculating device 100.

The water recirculating device 100 may comprise a pump 108 for providing a flow of water in the water recirculating device 100.

The water recirculating device 100 may comprise a water treatment arrangement 110. The water treatment arrangement 110 may comprise a filter arrangement and/or a UV light treatment arrangement.

The water recirculating device 100 may comprise a heating arrangement 112. The heating arrangement 112 may be configured to heat water passing the heating arrangement 112.

The water recirculating device 100 comprises a water quality sensor arrangement 114. The water quality sensor arrangement 114 may comprise an electrical conductivity sensor and/or a UV-sensor, and/or a turbidity sensor. The water quality sensor arrangement 114 is configured to collect water quality data of water collected by the collecting arrangement. It should be noted that the water quality sensor arrangement 114 is here for the sake of clarity illustrated as a box arranged between the collecting arrangement 104 and outlet 102, however, the water quality sensor arrangement may be arranged e.g. in the collecting arrangement 104, such that a water quality data of water in the collecting arrangement 104 is be collected.

The water recirculating device 100 may comprise an external water path 118 connected to an external water source. Hereby, external water may be fed to the water recirculating device 100.

The water recirculating device 100 comprises a presence sensor arrangement 116a, 116b, 116c. The presence sensor arrangement 116a, 116b, 116c is configured to collect presence sensor data. The presence sensor arrangement may comprise an infrared sensor, and/or a light receiving element, and/or an array of light receiving elements 116a, 116b. The presence sensor arrangement may comprise an electromagnetic radiation receiving sensor. The presence sensor arrangement may comprise an acoustic vibration receiving sensor. The presence sensor arrangement may comprise an accelerometer, and/or a force sensor, and/or a vibration sensor 116c. The accelerometer, and/or a force sensor, and/or a vibration sensor 116c may be placed in or at a supporting surface 120 being in proximity of the water recirculating device 100. The supporting surface 120 may be a floor of a shower cabin. The presence sensor arrangement may be placed in a ceiling of a room wherein the water recirculating device 100 is placed. The presence sensor arrangement may be placed on or near the supporting surface 120 on which an object is intended to be placed when being subjected to the water recirculating device 100. The presence sensor arrangement receives presence sensor data as a result of the object type interacting with the presence sensor arrangement. The presence sensor arrangement may comprise a sensor based on capacitive effects

The water recirculating device 100 is configured to be set in a recirculation mode and a discard mode. The recirculation mode comprises receiving water quality data from the water quality sensor arrangement 114 and determining a water quality measure of water collected by the collecting arrangement 104 based on the water quality data. Further, if the water quality measure of the water collected by the collecting arrangement 104 is below a first water quality threshold, the water collected by the collecting arrangement 104 is discarded via the discard path 106. If water collected by the collecting arrangement 104 is discarded via the discard path 106, external water may be fed to the water recirculating device 100 via the external water path 118. Hereby, a flow rate of water being output by the outlet 102 may be kept substantially constant.

If the water quality measure of the water collected by the collecting arrangement 104 is equal to or above the first water quality threshold, at least part of the water collected by the collecting arrangement 104 is recirculated. Hereby, water collected by the collecting arrangement may be reused and output by the outlet 102. If part of the water collected by the collecting arrangement 104 is recirculated, external water may be fed to the water recirculating device 100 via the external water path 118. Hereby, a flow rate of water being output by the outlet 102 may be kept substantially constant.

The discard mode comprises discarding the water collected by the collecting arrangement 104. The discard mode may comprise providing external water to the water recirculating device 100 via the external water path 118.

Referring now to FIG. 2, a flow chart illustrating, *inter alia,* a method for determining an object type being subjected to a water recirculating device is shown. Presence sensor data is received from the presence sensor arrangement of the water recirculating device at 222. The presence sensor arrangement may comprise an array of light receiving elements, and/or an infrared sensor. The presence sensor arrangement may comprise an accelerometer and/or a force sensor.

By way of example, some possible scenarios of how an object type being subjected to a water recirculating device is determined will now be described.

For example, a light receiving element may detect a change of intensity in received light as a result of a person or an object entering a proximity of the water recirculating device. Hereby, a human being may be differentiated from another object type by e.g. a thermal profile, and/or a body temperature, as detected by an infrared sensor.

It may also be possible for the presence sensor arrangement to determine a height of an object being subjected to the water recirculating device. Hereby, a human being may be differentiated from another object type.

Further, a movement pattern of the object being subjected to the water recirculating device may be determined. This may for example be possible by using the accelerometer and/or force sensor, and/or by using the light receiving element and/or infrared sensor. Hereby, a human being may be differentiated from another object type.

Further, the presence sensor arrangement may comprise a scale, thus providing the possibility the detect a weight of the object being subjected to the water recirculating device. Hereby, a human being may be differentiated from another object type.

Further, water quality data from the water quality sensor arrangement is received at 224. The water quality data indicates whether the object type being subjected to the water recirculating device is a human, or another object type. For example, water exiting the outlet of the water recirculating device may contact a person being subjected to the water recirculating device, thus allowing biological material, substances, and/or other types of substances to travel with the output water to the collecting arrangement wherein the output water is collected and subsequently analyzed by the water quality sensor arrangement. Such biological material, substances, and/or other types of substances may for example be unique to human beings, and therefore indicative of a human being subjected to the water recirculating device, as opposed to another object type, such as e.g. an animal or a household item.

The determination of the object type may be associated with a time stamp. The time stamp may comprise a time of day, a day of the week, month, and/or year. For example, if the object type is determined to be human, the determination may be associated with a time stamp indicating that the human was subjected to the water recirculating device at 8.00 am on a Monday the first week of July, 2017. Such information is here referred to as historical data pertaining to previous determinations of object types and respective previous time stamps. The historical data may be used for future determinations of object types being subjected to the water recycling device at 226.

In general, by utilizing several sensors and/or sources of data, the determination of the object type being subjected to the water recirculating device may be performed with a high level of reliability.

Still referring to FIG. 2, if the object type is determined to be human at 228 and 230, the water recycling device is set in a recirculation mode at 238. In contrast, if the object type is determined to no be a human, e.g. to be another object type, the water recirculation device is set in a discard mode at 240.

If the object type is determined to be human, a number of objects subjected to the water recirculating device may be determined based on the presence sensor data at 234 and 236. It is to be understood that several objects may be subjected to the water recirculating device, e.g. a human and another object, or several humans. One example of several humans being subjected to a water recirculating device is public showers wherein several outlets may be connected to a single water collecting arrangement. Thus, water collected from several outputs which have been in contact with several different human users, is mixed in the collecting arrangement. In this case, setting the water recirculating device in a discard mode may be preferable.

Consequently, if the determined number of objects is less than two, such as one, the water recirculating device may be set in a recirculation mode. Else, the water recirculating device may be set in a discard mode.

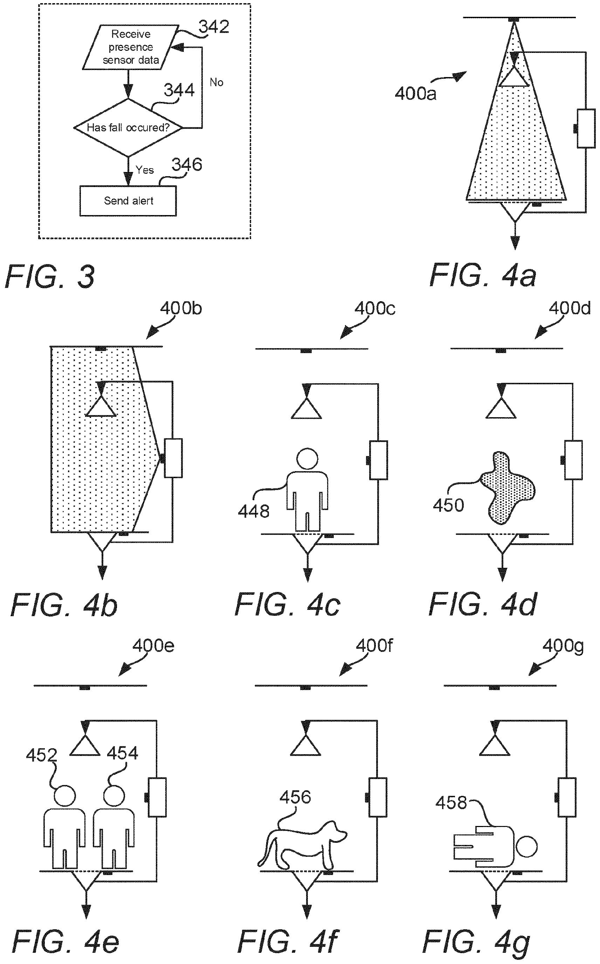

A fall monitoring may be performed at 232 if the determined object type is human. An example of a fall monitoring is illustrated in FIG. 3. The fall monitoring may utilize the presence sensor arrangement at 342 in order to determine whether a fall has occurred at 344. For example, a person slipping in the shower may be detected by the presence sensor arrangement via any of the sensor comprised in the presence sensor arrangement, such as an accelerometer arranged in a supporting surface such as a floor of a shower cabin. The accelerometer may in the case of a fall register an impulse caused by a person falling to the floor. A single light receiving element or an array of light receiving elements may also be able to register a person falling to the floor. If a fall is detected, an alert may be sent at 346 by the water recirculating device to an external system, such as emergency services.

It can be noted that reliability is of high importance in the field of water recirculating devices with respect to water quality and performance. Further, the determination of object type according to the inventive concept may be made with a certain reliability. In other words, a determination may be made that the object type is human with a reliability value. The reliability value may be compared to a reliability threshold, and if the reliability value is below the reliability threshold, the water recirculating device may be set in a discard mode. It is to be understood that the reliability threshold may vary between different applications.

A current mode of the water recirculating device, i.e. recirculation mode or discard mode, may be displayed on a user interface of the water recirculation device. The water recirculating device may be configured to receive user input via the user interface. The water recirculating device may be configured to receive an override command via the user interface in order to change a mode of the water recirculating device, i.e. switch from discard mode to recirculation mode or vice versa.

Some scenarios related to the presence sensor arrangement and different object types will now be described by way of example with reference to FIGS. 4a-4g. It is to be understood that some features have been separated for the sake of clarity, and that the illustrated examples can be combined within the scope of the inventive concept.

Referring now to FIG. 4a, a water recirculating device 400a is illustrated comprising a presence sensor arrangement. The presence sensor arrangement here comprises a light receiving element, such as an infrared sensor. The light receiving element is top mounted, and an example of a sensing volume resulting from such an arrangement is shown.

Referring now to FIG. 4b, a water recirculating device 400b is illustrated comprising a presence sensor arrangement. The presence sensor arrangement here comprises a light receiving element, such as an infrared sensor. The light receiving element is side mounted, and an example of a sensing volume resulting from such an arrangement is shown.

Referring now to FIG. 4c, a water recirculating device 400c is illustrated. A human 448 is subjected to the water recirculating device 400c.

Referring now to FIG. 4d, a water recirculating device 400d is illustrated. An unidentified object 450 is subjected to the water recirculating device 400d. According to the inventive concept, it may be sufficient to determine whether the object type is a human or not. Thus, if it has been determined that the object type is not human, it may not be required to further determine the specific object type.

Referring now to FIG. 4e, a water recirculating device 400e is illustrated. Two humans 452, 454 are here being subjected to the water recirculating device 400e. As described earlier in the present disclosure, several humans may be subjected to a water recirculating device having more than one output (not shown).

Referring now to FIG. 4f, a water recirculating device 400f is illustrated. An animal 456 is subjected to the water recirculating device 400f.

Referring now to FIG. 4g, a water recirculating device 400g is illustrated. A human 458 has fallen while being subjected to the water recirculating device 400g. The presence sensor arrangement may determine that a fall has occurred, and may send an alert to an external system.

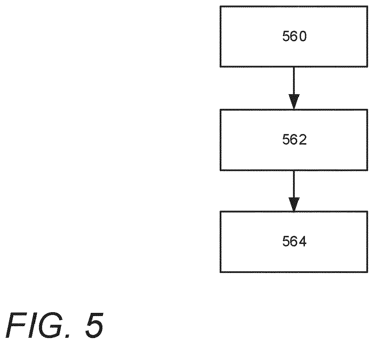

Referring now to FIG. 5, a method for determining an object type being subjected to a water recirculating device is illustrated in a flow chart. The method comprises a step 560 of receiving presence sensor data from a presence sensor arrangement of the water recirculating device, a step 562 of determining whether the object type is human based on the presence sensor data, and a step 564 of, if the object type is human, setting the water recirculating device in a recirculation mode, else setting the water recirculating device in a discard mode.

The invention has mainly been described above with reference to a few embodiments. However, as is readily appreciated by a person skilled in the art, other embodiments than the ones disclosed above are equally possible within the scope of the invention, as defined by the appended patent claims.

### List of reference signs

- 100: Water recirculating device
- 102: Outlet
- 104: Collecting arrangement
- 106: Discard path
- 108: Pump
- 110: Water treatment arrangement
- 112: Heating arrangement
- 114: Water quality sensor arrangement
- 116a: Presence sensor arrangement
- 116b: Presence sensor arrangement
- 116c: Presence sensor arrangement
- 118: External water path
- 120: Supporting surface
- 222: Step of receiving presence sensor data
- 224: Step of receiving water quality sensor data
- 226: Step of receiving historical data
- 228: Step of determining object type
- 230: Step of determining object type
- 232: Step of performing fall monitoring
- 234: Step of determining number of human objects
- 236: Step of determining number of human objects
- 238: Step of setting recirculation mode
- 240: Step of setting discard mode
- 342: Step of receiving presence sensor data
- 344: Step of determining whether a fall has occurred
- 346: Step of sending alert
- 400a: Water recirculating device
- 400b: "
- 400c: "
- 400d: "
- 400e: "
- 400f: "
- 400g: "
- 448: Human object
- 450: Unidentified object
- 452: Human
- 454: Human
- 456: Animal
- 458: Human
- 560: Step of receiving presence sensor data
- 562: Step of determining object type
- 564: Step of setting water recirculating device mode

## Claims

1. A method for operating a water recirculating device (100, 400a, 400b, 400c, 400d, 400e, 400f, 400g) in function of an object type's detection, the recirculating device (100, 400a, 400b, 400c, 400d, 400e, 400f, 400g) comprising:
an outlet (102) configured to output water;
a collecting arrangement (104) arranged to collect water output by the outlet (102); and
a discard path (106) configured to discard water from the water recirculating device (100, 400a, 400b, 400c, 400d, 400e, 400f, 400g);
a water quality sensor arrangement (114) configured to collect water quality data of water collected by the collecting arrangement (104);
wherein the method comprises:
receiving (222, 342, 560) presence sensor data from a presence sensor arrangement (116a, 116b, 116c) of the water recirculating device (100, 400a, 400b, 400c, 400d, 400e, 400f, 400g);
determining (228, 230, 562) whether the object type is human based on the presence sensor data and the water quality data; and
if the object type is human, setting the water recirculating device (100, 400a, 400b, 400c, 400d, 400e, 400f, 400g) in a recirculation mode (238, 564), else setting the water recirculating device (100, 400a, 400b, 400c, 400d, 400e, 400f, 400g) in a discard mode (240);
wherein the recirculation mode (238, 564) comprises:
receiving (224) water quality data from the water quality sensor arrangement (114) of the water recirculating device (100, 400a, 400b, 400c, 400d, 400e, 400f, 400g);
determining the water quality measure of the water collected by the collecting arrangement (104) based on the water quality data;
if the water quality measure is below a first water quality threshold, discarding the water collected by the collecting arrangement (104); and
if the water quality measure is equal to or above the first water quality threshold, recirculating at least part of the water collected by the collecting arrangement (104), and
wherein the discard mode (240) comprises:
discarding the water collected by the collecting arrangement (104).

2. The method according to claim 1, further comprising
associating the determination of the object type with a time stamp,
wherein the step of determining (228, 230, 562) whether the object type is human is further based on historical data pertaining to previous determinations of object types and respective previous time stamps.

3. The method according to any one of the preceding claims, further comprising, if the object type is human, determining (232, 344) whether a fall has occurred based on the presence sensor data.

4. The method according to any one of the preceding claims, wherein the presence sensor arrangement (116a, 116b, 116c) comprises an infrared sensor.

5. The method according to any one of the preceding claims, wherein the presence sensor arrangement (116a, 116b, 116c) comprises an array of light receiving elements.

6. The method according to any one of the preceding claims, wherein the presence sensor arrangement (116a, 116b, 116c) comprises an accelerometer and/or a force sensor.

7. The method according to any one of the preceding claims, further comprising, if the object type is human, determining (234, 236) a number of objects subjected to the water recirculating device (100, 400a, 400b, 400c, 400d, 400e, 400f, 400g) based on the presence sensor data, and if the number of objects is less than two, setting the water recirculating device (100, 400a, 400b, 400c, 400d, 400e, 400f, 400g) in the recirculation mode (238, 564), else setting the water recirculating device (100, 400a, 400b, 400c, 400d, 400e, 400f, 400g) in the discard mode (240).

8. The method according to any one of the preceding claims, wherein the water recirculating device (100, 400a, 400b, 400c, 400d, 400e, 400f, 400g) is a water recirculating shower.

9. A water recirculating device (100, 400a, 400b, 400c, 400d, 400e) comprising:
an outlet (102) configured to output water;
a collecting arrangement (104) arranged to collect water output by the outlet (102); and
a discard path (106) configured to discard water from the water recirculating device (100, 400a, 400b, 400c, 400d, 400e);
a presence sensor arrangement (116a, 116b, 116c) configured to collect presence sensor data;
a water quality sensor arrangement (114) configured to collect water quality data of water collected by the collecting arrangement (104);
a computing unit configured to receive presence sensor data and water quality data and to determine whether an object type being subjected to the water recirculating device (100, 400a, 400b, 400c, 400d, 400e, 400f, 400g) is human based on the presence sensor data and the water quality data;
wherein the water recirculating device (100, 400a, 400b, 400c, 400d, 400e, 400f, 400g) is configured to be set in a recirculation mode (238, 546) if the object type is human, and else to be set in a discard mode (240);
wherein the computing unit is further configured to receive the water quality data from the sensor arrangement and to determine a water quality measure based on the water quality data,
wherein the water recirculating device (100, 400a, 400b, 400c, 400d, 400e, 400f, 400g) is configured to, in the recirculation mode (238, 564), if the water quality measure is below a first water quality threshold, discard the water, and if the water quality measure is equal to or above the first water quality threshold, recirculate at least part of the water, and
wherein the water recirculating device (100, 400a, 400b, 400c, 400d, 400e, 400f, 400g) is configured to, in the discard mode (240), discard the water collected by the collecting arrangement (104).

10. The water recirculating device (100, 400a, 400b, 400c, 400d, 400e, 400f, 400g) according to claim 9, wherein the computing unit is configured to, if the object type is human, determine (232, 344) whether a fall has occurred in relation to the water recycling device based on the presence sensor data.

11. The water recirculating device (100, 400a, 400b, 400c, 400d, 400e, 400f, 400g) according to any one of claims 9 to 10, wherein the presence sensor arrangement (116a, 116b, 116c) comprises an infrared sensor.

12. The water recirculating device (100, 400a, 400b, 400c, 400d, 400e, 400f, 400g) according to any one of claims 9 to 11, wherein the presence sensor arrangement (116a, 116b, 116c) comprises an accelerometer and/or a force sensor and/or a vibration sensor.

## Patentansprüche

1. Verfahren zum Betreiben einer Wasserrezirkulationsvorrichtung (100, 400a, 400b, 400c, 400d, 400e, 400f, 400g) in Abhängigkeit von einer Objekttyperkennung, wobei die Rezirkulationsvorrichtung (100, 400a, 400b, 400c, 400d, 400e, 400f, 400g) umfasst:
einen Auslass (102), der so konfiguriert ist, dass er Wasser ausgibt;
eine Sammelanordnung (104), die so angeordnet ist, dass sie von dem Auslass (102) ausgegebenes Wasser sammelt; und
einen Entsorgungspfad (106), der so konfiguriert ist, dass er Wasser aus der Wasserrezirkulationsvorrichtung (100, 400a, 400b, 400c, 400d, 400e, 400f, 400g) entsorgt;
eine Wasserqualitätssensoranordnung (114), die so konfiguriert ist, dass sie Wasserqualitätsdaten von durch die Sammelanordnung (104) gesammeltem Wasser sammelt;
wobei das Verfahren umfasst:
Empfangen (222, 342, 560) von Anwesenheitssensordaten von einer Anwesenheitssensoranordnung (116a, 116b, 116c) der Wasserrezirkulationsvorrichtung (100, 400a, 400b, 400c, 400d, 400e, 400f, 400g);
Bestimmen (228, 230, 562), ob der Objekttyp menschlich ist, auf Grundlage der Anwesenheitssensordaten und der Wasserqualitätsdaten; und
wenn der Objekttyp menschlich ist, Versetzen der Wasserrezirkulationsvorrichtung (100, 400a, 400b, 400c, 400d, 400e, 400f, 400g) in einen Rezirkulationsmodus (238, 564), andernfalls Versetzen der Wasserrezirkulationsvorrichtung (100, 400a, 400b, 400c, 400d, 400e, 400f, 400g) in einen Entsorgungsmodus (240);
wobei der Rezirkulationsmodus (238, 564) umfasst:
Empfangen (224) von Wasserqualitätsdaten von der Wasserqualitätssensoranordnung (114) der Wasserrezirkulationsvorrichtung (100, 400a, 400b, 400c, 400d, 400e, 400f, 400g);
Bestimmen des Wasserqualitätsmaßes des durch die Sammelanordnung (104) gesammelten Wassers auf Grundlage der Wasserqualitätsdaten;
wenn das Wasserqualitätsmaß unter einem ersten Wasserqualitätsschwellenwert liegt, Entsorgen des durch die Sammelanordnung (104) gesammelten Wassers; und
wenn das Wasserqualitätsmaß gleich oder größer dem ersten Wasserqualitätsschwellenwert ist, Rezirkulieren zumindest eines Teils des durch die Sammelanordnung (104) gesammelten Wassers, und
wobei der Entsorgungsmodus (240) umfasst:
Entsorgen des durch die Sammelanordnung (104) gesammelten Wassers.

2. Verfahren nach Anspruch 1, ferner umfassend
Verknüpfen der Bestimmung des Objekttyps mit einem Zeitstempel,
wobei der Schritt des Bestimmens (228, 230, 562), ob der Objekttyp menschlich ist, ferner auf historischen Daten basiert, die sich auf frühere Bestimmungen von Objekttypen und jeweilige frühere Zeitstempel beziehen.

3. Verfahren nach einem der vorhergehenden Ansprüche, ferner umfassend, wenn der Objekttyp menschlich ist, Bestimmen (232, 344), ob ein Sturz stattgefunden hat, auf Grundlage der Anwesenheitssensordaten.

4. Verfahren nach einem der vorhergehenden Ansprüche, wobei die Anwesenheitssensoranordnung (116a, 116b, 116c) einen Infrarotsensor umfasst.

5. Verfahren nach einem der vorhergehenden Ansprüche, wobei die Anwesenheitssensoranordnung (116a, 116b, 116c) eine Anordnung von Lichtempfangselementen umfasst.

6. Verfahren nach einem der vorhergehenden Ansprüche, wobei die Anwesenheitssensoranordnung (116a, 116b, 116c) einen Beschleunigungsmesser und/oder einen Kraftsensor umfasst.

7. Verfahren nach einem der vorhergehenden Ansprüche, ferner umfassend, wenn der Objekttyp menschlich ist, Bestimmen (234, 236) einer Anzahl von Objekten, die der Wasserrezirkulationsvorrichtung (100, 400a, 400b, 400c, 400d, 400e, 400f, 400g) ausgesetzt sind, auf Grundlage der Anwesenheitssensordaten, und wenn die Anzahl von Objekten weniger als zwei ist, Versetzen der Wasserrezirkulationsvorrichtung (100, 400a, 400b, 400c, 400d, 400e, 400f, 400g) in den Rezirkulationsmodus (238, 564), andernfalls Versetzen der Wasserrezirkulationsvorrichtung (100, 400a, 400b, 400c, 400d, 400e, 400f, 400g) in den Entsorgungsmodus (240).

8. Verfahren nach einem der vorhergehenden Ansprüche, wobei es sich bei der Wasserrezirkulationsvorrichtung (100, 400a, 400b, 400c, 400d, 400e, 400f, 400g) um eine Wasserrezirkulationsdusche handelt.

9. Wasserrezirkulationsvorrichtung (100, 400a, 400b, 400c, 400d, 400e), umfassend:
einen Auslass (102), der so konfiguriert ist, dass er Wasser ausgibt;
eine Sammelanordnung (104), die so angeordnet ist, dass sie von dem Auslass (102) ausgegebenes Wasser sammelt; und
einen Entsorgungspfad (106), der so konfiguriert ist, dass er Wasser aus der Wasserrezirkulationsvorrichtung (100, 400a, 400b, 400c, 400d, 400e) entsorgt;
eine Anwesenheitssensoranordnung (116a, 116b, 116c), die so konfiguriert ist, dass sie Anwesenheitssensordaten sammelt;
eine Wasserqualitätssensoranordnung (114), die so konfiguriert ist, dass sie Wasserqualitätsdaten von durch die Sammelanordnung (104) gesammeltem Wasser sammelt;
eine Recheneinheit, die so konfiguriert ist, dass sie Anwesenheitssensordaten und Wasserqualitätsdaten empfängt und auf Grundlage der Anwesenheitssensordaten und der Wasserqualitätsdaten bestimmt, ob ein Objekttyp, der der Wasserrezirkulationsvorrichtung (100, 400a, 400b, 400c, 400d, 400e, 400f, 400g) ausgesetzt ist, menschlich ist;
wobei die Wasserrezirkulationsvorrichtung (100, 400a, 400b, 400c, 400d, 400e, 400f, 400g) so konfiguriert ist, dass sie in einen Rezirkulationsmodus (238, 546) versetzt wird, wenn der Objekttyp menschlich ist, und andernfalls in einen Entsorgungsmodus (240) versetzt wird;
wobei die Recheneinheit ferner so konfiguriert ist, dass sie die Wasserqualitätsdaten von der Sensoranordnung empfängt und auf Grundlage der Wasserqualitätsdaten ein Wasserqualitätsmaß bestimmt,
wobei die Wasserrezirkulationsvorrichtung (100, 400a, 400b, 400c, 400d, 400e, 400f, 400g) so konfiguriert ist, dass sie in dem Rezirkulationsmodus (238, 564), wenn das Wasserqualitätsmaß unter einem ersten Wasserqualitätsschwellenwert liegt, das Wasser entsorgt, und, wenn das Wasserqualitätsmaß gleich oder größer dem ersten Wasserqualitätsschwellenwert ist, zumindest einen Teil des Wassers rezirkuliert, und
wobei die Wasserrezirkulationsvorrichtung (100, 400a, 400b, 400c, 400d, 400e, 400f, 400g) so konfiguriert ist, dass sie in dem Entsorgungsmodus (240) das durch die Sammelanordnung (104) gesammelte Wasser entsorgt.

10. Wasserrezirkulationsvorrichtung (100, 400a, 400b, 400c, 400d, 400e, 400f, 400g) nach Anspruch 9, wobei die Recheneinheit so konfiguriert ist, dass sie, wenn es der Objekttyp menschlich ist, auf Grundlage der Anwesenheitssensordaten bestimmt (232, 344), ob ein Sturz in Bezug auf die Wasserrezirkulationsvorrichtung stattgefunden hat.

11. Wasserrezirkulationsvorrichtung (100, 400a, 400b, 400c, 400d, 400e, 400f, 400g) nach einem der Ansprüche 9 bis 10, wobei die Anwesenheitssensoranordnung (116a, 116b, 116c) einen Infrarotsensor umfasst.

12. Wasserrezirkulationsvorrichtung (100, 400a, 400b, 400c, 400d, 400e, 400f, 400g) nach einem der Ansprüche 9 bis 11, wobei die Anwesenheitssensoranordnung (116a, 116b, 116c) einen Beschleunigungsmesser und/oder einen Kraftsensor und/oder einen Vibrationssensor umfasst.

## Revendications

1. Procédé de fonctionnement d'un dispositif de recirculation de l'eau (100, 400a, 400b, 400c, 400d, 400e, 400f, 400g) en fonction d'un type d'objet détecté, le dispositif de recirculation de l'eau (100, 400a, 400b, 400c, 400d, 400e, 400f, 400g) comprenant :
un orifice de sortie (102) conçu pour distribuer de l'eau ;
un agencement de collecte (104) disposé pour collecter l'eau distribuée par l'orifice de sortie (102) ; et
un trajet de rejet (106) conçu pour rejeter l'eau provenant du dispositif de recirculation de l'eau (100, 400a, 400b, 400c, 400d, 400e, 400f, 400g) ;
un agencement de capteur de qualité de l'eau (114) conçu pour collecter des données de qualité de l'eau collectée par l'agencement de collecte (104) ;
dans lequel le procédé comprend :
la réception (222, 342, 560) de données de capteur de présence provenant d'un agencement de capteur de présence (116a, 116b, 116c) du dispositif de recirculation de l'eau (100, 400a, 400b, 400c, 400d, 400e, 400f, 400g) ;
la détermination (228, 230, 562) de si oui ou non le type d'objet est humain sur la base des données de capteur de présence et des données de qualité de l'eau ; et
si le type d'objet est humain, le réglage du dispositif de recirculation de l'eau (100, 400a, 400b, 400c, 400d, 400e, 400f, 400g) dans un mode de recirculation (238, 564), sinon le réglage du dispositif de recirculation de l'eau (100, 400a, 400b, 400c, 400d, 400e, 400f, 400g) dans un mode de rejet (240) ;
dans lequel le mode de recirculation (238, 564) comprend :
la réception (224) de données de qualité de l'eau depuis l'agencement de capteur de qualité de l'eau (114) du dispositif de recirculation de l'eau (100, 400a, 400b, 400c, 400d, 400e, 400f, 400g) ;
la détermination de la mesure de qualité de l'eau collectée par l'agencement de collecte (104) sur la base des données de qualité de l'eau ;
si la mesure de la qualité de l'eau est inférieure à un premier seuil de qualité de l'eau, le rejet de l'eau collectée par l'agencement de collecte (104) ; et
si la mesure de qualité de l'eau est égale ou supérieure au premier seuil de qualité de l'eau, la recirculation au moins en partie de l'eau collectée par l'agencement de collecte (104), et
dans lequel le mode de rejet (240) comprend :
le rejet de l'eau collectée par l'agencement de collecte (104) .

2. Procédé selon la revendication 1, comprenant en outre
l'association de la détermination du type d'objet avec un horodatage,
dans lequel l'étape de détermination (228, 230, 562) de si le type d'objet est humain est en outre basée sur des données historiques relatives à des déterminations précédentes de types d'objet et des horodatages précédents.

3. Procédé selon l'une quelconque des revendications précédentes, comprenant en outre, si le type d'objet est humain, la détermination (232, 344) de si une chute s'est produite sur la base des données de capteur de présence.

4. Procédé selon l'une quelconque des revendications précédentes, dans lequel l'agencement de capteur de présence (116a, 116b, 116c) comprend un capteur à infrarouge.

5. Procédé selon l'une quelconque des revendications précédentes, dans lequel l'agencement de capteur de présence (116a, 116b, 116c) comprend un réseau d'éléments de réception de lumière.

6. Procédé selon l'une quelconque des revendications précédentes, dans lequel l'agencement de capteur de présence (116a, 116b, 116c) comprend un accéléromètre et/ou un capteur de force.

7. Procédé selon l'une quelconque des revendications précédentes, comprenant en outre, si le type d'objet est humain, la détermination (234, 236) d'un nombre d'objets soumis au dispositif de recirculation de l'eau (100, 400a, 400b, 400c, 400d, 400e, 400f, 400g) sur la base des données de capteur de présence, et si le nombre d'objets est inférieur à deux, le réglage du dispositif de recirculation de l'eau (100, 400a, 400b, 400c, 400d, 400e, 400f, 400g) dans le mode de recirculation (238, 564), sinon, le réglage du dispositif de recirculation de l'eau (100, 400a, 400b, 400c, 400d, 400e, 400f, 400g) dans le mode de rejet (240).

8. Procédé selon l'une quelconque des revendications précédentes, dans lequel le dispositif de recirculation de l'eau (100, 400a, 400b, 400c, 400d, 400e, 400f, 400g) est une douche de recirculation de l'eau.

9. Dispositif de recirculation de l'eau (100, 400a, 400b, 400c, 400d, 400e) comprenant :
un orifice de sortie (102) conçu pour distribuer de l'eau ;
un agencement de collecte (104) disposé pour collecter l'eau distribuée par l'orifice de sortie (102) ; et
un trajet de rejet (106) conçu pour rejeter de l'eau provenant du dispositif de recirculation de l'eau (100, 400a, 400b, 400c, 400d, 400e) ;
un agencement de capteur de présence (116a, 116b, 116c) conçu pour collecter des données de capteur de présence ;
un agencement de capteur de qualité de l'eau (114) conçu pour collecter des données de qualité de l'eau collectée par l'agencement de collecte (104) ;
une unité de calcul configurée pour recevoir des données de capteur de présence et des données de qualité de l'eau et pour déterminer si un type d'objet soumis au dispositif de recirculation de l'eau (100, 400a, 400b, 400c, 400d, 400e, 400f, 400g) est humain sur la base des données de capteur de présence et des données de qualité de l'eau ;
dans lequel le dispositif de recirculation de l'eau (100, 400a, 400b, 400c, 400d, 400e, 400f, 400g) est conçu pour être réglé dans un mode de recirculation (238, 546) si le type d'objet est humain, et sinon pour être réglé dans un mode de rejet (240) ;
dans lequel l'unité de calcul est en outre configurée pour recevoir les données de qualité de l'eau depuis l'agencement de capteur et pour déterminer une mesure de qualité de l'eau sur la base des données de qualité de l'eau,
dans lequel le dispositif de recirculation de l'eau (100, 400a, 400b, 400c, 400d, 400e, 400f, 400g) est conçu pour, dans le mode de recirculation (238, 564), si la mesure de qualité de l'eau est inférieure à un premier seuil de qualité de l'eau, rejeter l'eau, et si la mesure de qualité de l'eau est égale ou supérieure au premier seuil de qualité de l'eau, faire recirculer au moins une partie de l'eau, et
dans lequel le dispositif de recirculation de l'eau (100, 400a, 400b, 400c, 400d, 400e, 400f, 400g) est conçu pour, dans le mode de rejet (240), rejeter l'eau collectée par l'agencement de collecte (104).

10. Dispositif de recirculation de l'eau (100, 400a, 400b, 400c, 400d, 400e, 400f, 400g) selon la revendication 9, dans lequel l'unité de calcul est configurée pour, si le type d'objet est humain, déterminer (232, 344) si une chute s'est produite en relation avec le dispositif de recyclage de l'eau sur la base des données de capteur de présence.

11. Dispositif de recirculation de l'eau (100, 400a, 400b, 400c, 400d, 400e, 400f, 400g) selon l'une quelconque des revendications 9 et 10, dans lequel l'agencement de capteur de présence (116a, 116b, 116c) comprend un capteur à infrarouge.

12. Dispositif de recirculation de l'eau (100, 400a, 400b, 400c, 400d, 400e, 400f, 400g) selon l'une quelconque des revendications 9 à 11, dans lequel l'agencement de capteur de présence (116a, 116b, 116c) comprend un accéléromètre et/ou un capteur de force et/ou un capteur de vibrations.
